**Europäisches Patentamt**

**European Patent Office**

**Office européen des brevets**

(19)

(11) Publication number : **0 651 345 A2**

(12)

# EUROPEAN PATENT APPLICATION

(21) Application number : **94308009.3**

(22) Date of filing : **28.10.94**

(51) Int. Cl.$^6$ : **G06K 9/18**

(30) Priority : **28.10.93 US 142031**

(43) Date of publication of application :
**03.05.95 Bulletin 95/18**

(84) Designated Contracting States :
**DE GB**

(71) Applicant : **AT & T GLOBAL INFORMATION
SOLUTIONS INTERNATIONAL INC.
1700 South Patterson Boulevard
Dayton, Ohio 45479 (US)**

(72) Inventor : **Ho, Benedict C.M.
488 Heatherhill Pl.
Waterloo, Ontario N2T 1H7 (CA)**
Inventor : **Franklin, Gene R.
577 Stonebury Crescent
Waterloo, Ontario (CA)**

(74) Representative : **Robinson, Robert George et
al
International Patent Department,
AT&T GIS Limited,
915 High Road,
North Finchley
London N12 8QJ (GB)**

(54) **Method for reading MICR data.**

(57) A method of identifying characters which are printed on a document (14) in a magnetic ink (MICR). The method including first attempting to read the characters with a MICR character reader (22) as the primary means for identifying the characters printed on the documents, and secondly reading the characters with a supplemental optical reader (23) to assist in the identification of characters whose identity cannot be accurately determined by the MICR reader (22). The optical reader (23), being supplemental to the MICR reader (22), is less sophisticated in construction and operation as an optical reader employed as the sole or primary reader in document processing system.

FIG. 1

The present invention relates to character recognition systems and, more particularly, to a system for reading MICR characters.

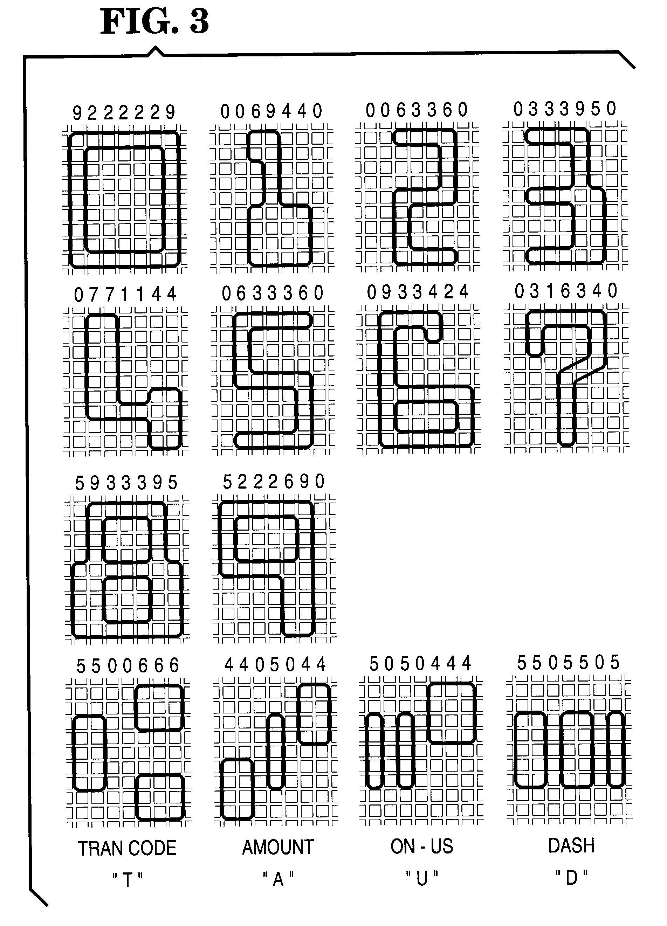

Documents such as checks and deposit slips used in the banking industry, for example, have certain key data printed on the documents. The key data may include bank number, customer account number, document or check number, and the monetary amount of the document, for example, and is typically printed on the documents in magnetic ink in special stylized fonts. One such stylized font, adopted by the American Banking Association, is called E-13B. Figure 3 illustrates the E-13B numerical font characters. The documents with this key data thereon are processed by banking machines like proof and sorting machines. The document processing is effected by moving the documents with the key or magnetic ink character recognition (MICR) data thereon in reading relationship with a magnetic or MICR reader positioned along a document track included in the banking machines. As a document is moved in the document track past the MICR reader, waveforms are generated by the MICR reader. Each character within a particular font is printed so as to have its own individual waveform generated by the MICR reader. One characteristic of E-13B font is that each character within the font always starts with a positive-going waveform to indicate the start of a character. The output signals from the MICR reader are electronically processed by character recognition circuitry to identify the waveforms being read as being indicative of individual characters within that particular font.

There are several general situations which cause problems with the reading of characters which are printed in E-13B font. These situations include:

1. Characters which are not printed according to predetermined specifications. These include characters with ragged edges, characters with broken elements, and characters with missing elements. Even though a character is printed correctly, initially, some of the situations mentioned here may develop through abusive handling of the document on which the characters are printed.

2. Characters with extraneous MICR ink spatter nearby. This is commonly referred to as EIF.

3. Characters with pitch problems. Character pitch is most easily defined as the distance between the right hand edge of one character to the right hand edge of an adjacent character printed in the same font.

4. Misreads. A "misread" occurs when the character recognized by the recognition circuitry is not the same as the corresponding actual character appearing on the document.

5. Corrected documents containing encoded data or text which has been repaired. Encoded data or text containing errors is often repaired by placing a label containing the correct data or text over the characters to be repaired. Although the repaired document is visually correct, many conventional MICR readers will read the replacement characters printed on top of the label as well as the original, incorrect, characters beneath the repair label. This "double encoding" seen by the MICR reader repaired area may result in rejects and misreads.

Each one of the above situations may cause rejects to occur when documents are read by a MICR reader. The rejects occur at a typical reject rate of about 2%. When documents are fed or moved past a MICR reader at a rate of 400 to 500 documents per minute, even a reject rate of only 2% generates a large number of documents which have to be reprocessed.

It is therefore an object of the present invention to lower or improve the reject rate for reading MICR characters, particularly those printed in the E-13B font and to improve the reject rate in a simple and inexpensive manner.

According to the present invention there is provided a method of recognizing a character which is printed on a document in a magnetic ink (MICR) font, said method comprising the step of: magnetically reading said MICR character; and being characterized by the step of optically reading said MICR character should said step of magnetically reading said MICR character fail to identify said character.

The described embodiment is optimized for reading characters printed in magnetic ink character font E-13B along the bottom of turnaround documents such as bank checks. The reader includes a MICR character reader as the primary means for identifying the characters printed on the documents, and a supplemental optical reader to assist in the identification of characters whose identity cannot be accurately determined by the MICR reader. The optical reader, being supplemental to the MICR reader, need not be as sophisticated in construction and operation as an optical reader employed as the sole or primary reader in document processing system.

An embodiment of the present invention will now be described, by way of example, with reference to the accompanying drawings in which:-

Fig. 1 is a general schematic view, in block form, showing a preferred form of a reader or apparatus in accordance with the present invention, with the top edge of a document to be read being shown;

Fig. 2 is a diagrammatic view of a document, such as a check, which may be processed by the apparatus shown in Figure 1; and

Fig. 3 illustrates the E-13B magnetic ink font characters as adopted by the American Banking Association.

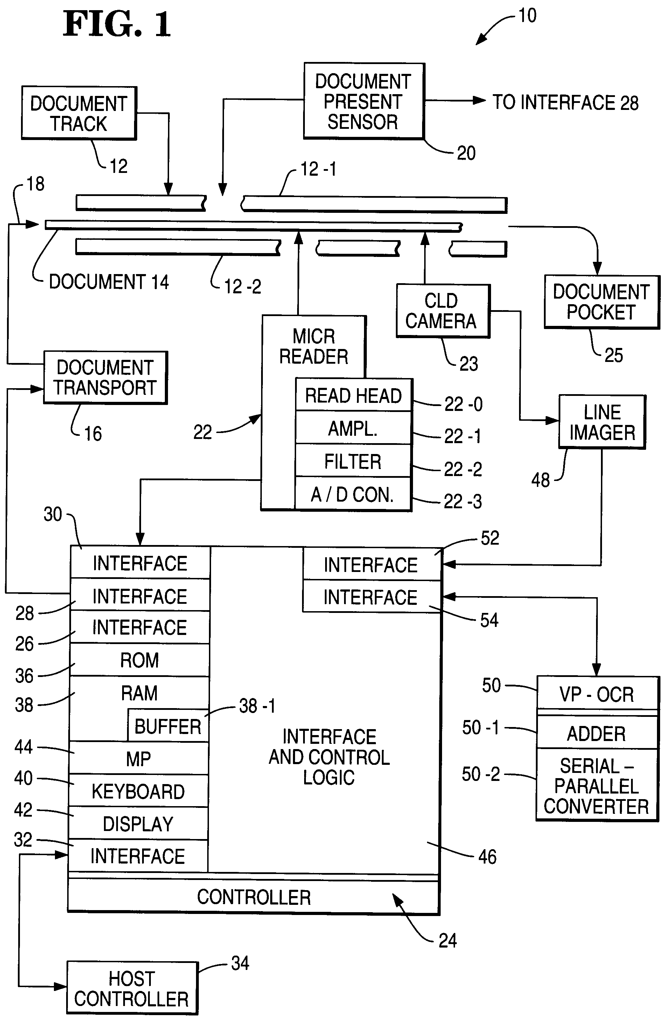

Figure 1 provides a general schematic view of a reader or apparatus 10 in accordance with the present invention. The apparatus 10 includes a document track 12 having upstanding side walls 12-1 and 12-2 which are spaced apart to receive a document 14, for example a bank check, therebetween. A document transport mechanism 16 is used to move the document 14 along the document track 12 (in the direction of arrow 18) in reading relationship with a document presence sensor 20 and a MICR reader 22. After reading by the MICR reader 22, the document 14 is moved in operative relationship with a code line display (CLD) camera 23, which is also positioned along the document track 12 The purpose of the camera 23 is to optically scan the MICR line of data on the document 14 and thereby provide image data about the MICR line to a controller 24 as will be described hereinafter. The document 14 which was read is then deposited in a document pocket 25. The MICR reader elements discussed in this paragraph are well known by those skilled in the art and operate in a conventional manner; consequently, further discussion of these elements is not deemed necessary.

The means for controlling the operation of the apparatus 10 includes the controller 24 as shown in Figure 1. The controller 24 itself is conventional; however, a functional, schematic representation of the controller is shown to facilitate a discussion of the various functions performed by this controller.

The controller 24 has a plurality of interfaces 26, 28, 30, and 32 providing coupling between the controller and the various elements included in the apparatus 10. Interface 26 is used to couple the controller 24 to the various sensors and motors (not shown) which are included in the document transport 16. Interface 28 receives the output from the document present sensor 20 which informs the controller 24 of a document approaching the MICR reader 22. Interface 30 receives the output of the MICR reader 22, and interface 32 is used to couple the controller 24 to a host controller 34 where necessary or desirable.

The controller 24 also includes a read only memory (ROM) 36, a random access memory (RAM) 38, a keyboard 40, a display 42, and a microprocessor (MP) 44. The various elements included in the controller 24 are all interconnected by interface and control logic 46 to enable the controller 24 itself to function conventionally.

The method of this invention may be implemented by software routines, for example, which may be down loaded from the host controller 34 into the RAM 38 of the controller 24. Alternatively, the software routines may be incorporated into the ROM 36 of the controller 24. Before discussing the method of this invention, a discussion of the basic steps which are included in processing MICR characters will be presented.

The basic steps in processing the waveforms from MICR characters are as follows:

1. Locate a character and then accurately determine the start of the character. It should be recalled that the start of a character printed in the E-13B character font always starts with a positive going waveform.

2. Extract the "features" from the waveform associated with a character and position these features relative to the start of the associated waveform. Extracted features include "positive peak values", "negative peak values", and "substantially zero values" which are arranged in predermined combinations for the characters within the E-13B font.

3. Match the extracted "features" against all the templates for the E-13B font. A template is essentially the particular combination of positive, negative and substantially zero values for an individual character and the positions they are allowed to occupy for an individual character.

4. Apply character recognition rules to the extracted "features" to determine if the features actually match the features included in one of the templates well enough to be recognized as that particular character.

The above four general steps may be performed by the controller 24 after the MICR data is received from the MICR reader 22. As an aside, the MICR reader 22 (Figure 1) may include additional conventional circuits, such as an amplifier 22-1, a filter 22-2, and an analog/digital converter 22-3, which are not important to an understanding of this invention. The filter 22-2 removes some of the noise associated with the waveforms generated through the reading of the MICR characters. In a reader as described above employing a document transport mechanism for moving documents past the read head at a document track speed of 104 inches per second, the waveforms from the read head 22-0 are sampled at a rate of 128,000 samples per second. The converter 22-3 converts the waveform samples into eight bit bytes of data which are processed by the controller 26. Certain thresholding functions are performed by software stored in the RAM 38, for example. The thresholding functions basically eliminate certain signals below a certain level, as these signals generally are noise signals. The sampled signals are then examined for the positive, negative, and substantially zero values which are indicative of the characters in the E-13B font as discussed earlier herein. Because this aspect is not important to an understanding of this invention, it need not be described in further detail. Additional information concerning MICR data and readers is provided in U.S. Patent Number 5,026,974, incorporated herein by reference. Patent Number 5,026,974 is assigned to the Assignee of the present invention. The apparatus 10 includes the CLD camera 23 (which is located along the document feed path following the MICR reader 22), a line imager 48, and a vertical projection optical character reader which is shown as VP-OCR in Figure 1, and which shall be referred to hereinafter as optical reader 50. Interface 52 is used to couple the line imager 48 to the controller 24, and similarly, interface 54 is used to couple the optical reader 50 to the controller 24.

The optical reader 50 (Figure 1) includes an adder 50-1 and a serial-to-parallel converter, hereinafter referred to as converter 50-2. Portions of the optical reader 50 also reside in software located in the RAM 38 when the controller 24 is in operation. It should be noted that because the optical system is used only to assist the MICR reader 22, the optical recognition apparatus and scheme employed within a hybrid reader system comprising MICR and OCR readers can be less sophisticated than an optical system which is relied upon as the sole character recognition mechanism within a system. In other words, the output from the MICR reader 22 is utilized for the basic character recognition; however, the output of the optical reader 50 provides enough margin for differentiation to assist the MICR reader 22 when the MICR reader 22 has a problem with reading a particular character.

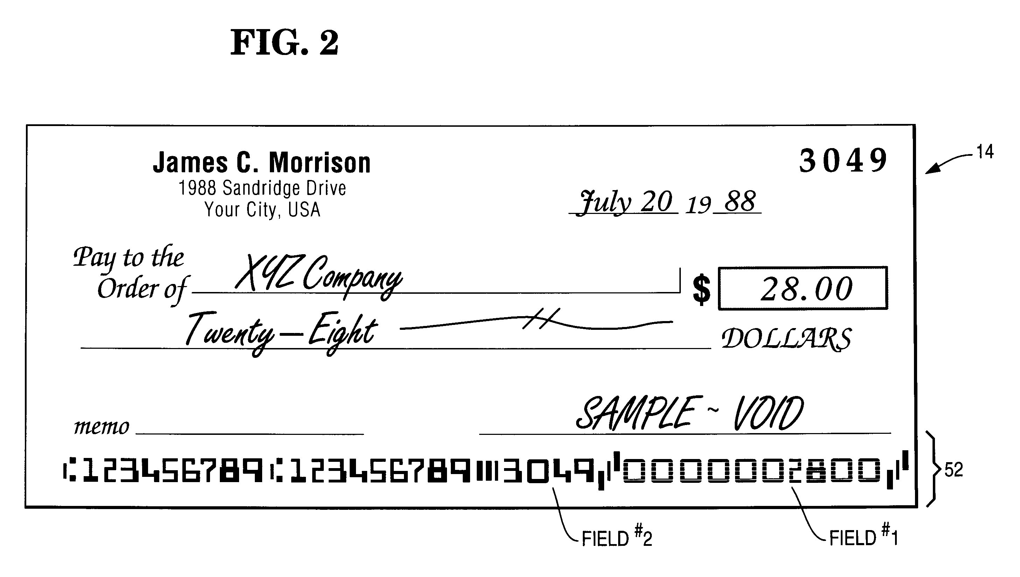

As a document 14 is moved past the CLD camera 23, the entire document may be iinaged or only a portion of the document 14 may be imaged depending upon the type of CLD camera 23 being used. Figure 2 is a diagrammatic view of a docuiiient 14, with the lower portion shown, identified by reference numeral 52, being the portion which is imaged by the CLD camera 23. The height of the imaged area 52 is about one-half inch, as measured in the vertical direction in Figure 2. Naturally, different values could be used for different applications. The imaged area 52-1 includes the monetary amount of the document, shown within the MICR character field identified as Field #1, and the bank of origin, check number, customer account number, and similar information, shown within the MICR character field identified as Field #2. In general, the data in Field #2 is printed on the document by the check manufacturer, and the data in Field #1 is printed on the check after it is received at a bank of first entry by the customer making a deposit of the check. In the embodiment described, the characters within the Fields #1 and #2 are printed or encoded in E-13B font, as illustrated in Figure 3.

Optical image data is obtained and processed as follows. Successive vertical scans of picture elements, or pixels, are provided by the CLD camera 23, starting at the right side of the check (as viewed in Figure 1) and proceeding towards the left side thereof In the embodiment described, camera 23 is capable of generating 160 pixels per inch in the vertical direction, as viewed in Figure 2. The output of camera 23, an analog, gray scale signal, is provided to line imager 48 for digitizing and processing.

Line imager 48 performs various processing tasks including thresholding to convert the gray scale signal to a black/white signal and analog-to-digital pixel conversion to transform the black/white signal to a series of binary pixels having values of "one", corresponding to a black picture element, and "zero", corresponding to a white picture- element. Line imager 48 also performs character location and formatting to isolate and refine the pixel information associated with a character being iinaged by camera 23.

The formatted pixel data is received by VP-OCR and compared with a series of character templates, i.e. pixel data patterns corresponding to the various E-13B font characters, to identify a match between the pixel data pattern associated with the imaged character read from document 14 and the character templates.

In the preferred embodiment, the pixel data for each imaged character is combined, scaled and mapped into an array of pixels having nine rows and seven columns. Several rows and columns of pixels may be combined to produce the nine row, seven column array. The transformed pixel data is then accumulated within each column to generate seven pixel totals. These totals, which can be said to provide a histograin of the imaged character, are then compared to the known histogram "templates" for each of the standard E-13B characters.

Referring again to Figure 3, the E-13B font characters illustrated are each shown residing on a nine row by seven column grid. The histogram templates associated with each of the font characters are shown in Figure 3 above the corresponding characters and summarized below.

## E-13B Font Character Templates

| MICR Character | Template |
| --- | --- |
| 0 | 9222229 |
| 1 | 0069440 |
| 2 | 0063360 |
| 3 | 0333950 |
| 4 | 0771144 |
| 5 | 0633360 |
| 6 | 0933424 |
| 7 | 0316340 |
| 8 | 5933395 |
| 9 | 5222690 |
| Transaction Code "T" | 5500666 |
| Amount Code "A" | 4405044 |
| On-Us Code "U" | 5050444 |
| Dash | 5505505 |

It can be seen in the above table that each character has a unique template which can be used to identify the character. Correlation between the imaged character read from document 14 and a character template can be determined by calculating the difference between the histogram associated with the imaged character read from document 14 and each one of the character templates. Ideally, a character match would produce a difference of zero for each of the seven digit positions included in the histogram for the imaged character and the character template providing a match.

As with an MICR reader, there are many situations which may cause errors in the optical read process. For example, characters having ragged edges, broken elements, hissing elements or extraneous MICR ink spatter, smudges or other markings nearby, are susceptible to misreads by the optical system. Accordingly, the system may be designed to declare a character match even though a small difference between the histogram for the imaged character and a character template exists.

Some of the above-described situations which may cause misreads in the optical read process may also cause misreads in the MICR reader.

As stated earlier, the optical character recognition procedure, described above, supplements the MICR process for reading E-13B magnetic ink characters performed by a conventional MICR reader. Only upon a failure of the MICR reader to identify a character will the output of the optical reader be considered to determine the identity of the character. Should the optical reader also fail to identify the character with reasonable accuracy the document will be identified to the system operator and notification will be provided that a read error has occurred. In fact, some of the above-described situations which may cause misreads in the MICR read process may also cause misreads in the optical read process. The document may require reprocessing or manual processing to complete the read operation.

It can thus be seen that there has been provided by the present invention a method and apparatus which improves the rejection rate for reading MICR characters printed in the E-13B character font. The invention provides a low cost optical reader and method for reading MICR characters optically so that the reading of the characters optically can supplement the reading of MICR characters performed by a conventional MICR reader when the results of the MICR read are indeterminate.

Those skilled in the art will recognize that the invention is not limited to the specific embodiments described above and that numerous modifications and changes are possible without departing from the scope of the present invention. For example, although the above detailed description describes a primary MICR reader and secondary optical reader employed within a bank processing system to read E-13B magnetic ink characters from bank checks, turnaround documents other than bank checks may be read and processed as described above. The system may be modified to read magnetic ink character fonts other than E-13B. The primary reader may be an optical, bar code, or other type of character reader. In such a case, non-magnetic ink character fonts may be read by the system. The positioning of the MICR and optical readers may be varied from that described. Additionally, the height and scanning resolution of the optical caiiiera may be modified for different applications.

The process described above wherein scan data generated by CLD camera 23 for an iiiiaged character is mapped into an array of pixels having nine rows and seven columns, and the pixel data accumulated within each column to generate seven pixel totals may also be modified For example, a pixel array other than a nine row by seven column array may be utilized, or pixel data may be accumulated within each row or some other division within the pixel array.

## Claims

1. A method of recognizing a character which is printed on a document (14) in a magnetic ink (MICR) font, said method comprising the step of: magnetically reading said MICR character; and being characterized by the step of optically reading said MICR character should said step of magnetically reading said MICR character fail to identify said character.

2. A method according to claim 1, characterized in that said step of optically reading said MICR character comprises the steps of: optically imaging said character to provide an array including rows and columns of binary image data corresponding to said imaged character, with said image data comprising a first bit to indicate the presence of a portion of said character and a second bit to indicate the absence of a portion of said character summing said first bits along the columns of said array to generate a histogram, said histogram containing a total of first bits for each of the associated columns included in said array; and comparing said histogram to each one of a plurality of predetermined histograms, each one of said predetermined histograms corresponding to a known character.

3. A method of recognizing a character which is printed in E-13B font on a document wherein magnetically reading said E-13B character fails to identify said character, said method being characterized by the steps of: (a) optically imaging said character to provide an array including rows and columns of binary image data corresponding to said character, with said image data comprising a first bit to indicate the presence of a portion of said character and a second bit to indicate the absence of a portion of said character (b) adding up said first bits which are located in a starting column of said array to arrive at a total count of first bits for said starting column; (c) repeating step (b) for the next adjacent column in said array and the remaining subsequent columns in said array to arrive at a total count of first bits for each of the columns remaining in said array; and (d) using the total counts of first bits for each of the columns in said array as being indicative of the character within the E-13B font.

4. A method according to claim 3, characterized in that step (d) is effected by: (d-1) grouping said columns so as to obtain a predetermined number of groups of columns within said array, with said predetermined number being fewer than the number of columns in said array; (d-2) adding together the total counts for each of the columns included in said groups of columns so as to obtain a group total count for each of said groups of columns; and (d-3) using said group total counts for each of said groups of columns in said array as being indicative of a character within said E-13B font.

5. A method according to claim 4, characterized in that said grouping step (d-1) is effected to obtain said predetermined number of groups which is equal to the number of identifying zones within a character in E-13B font.

6. A method of electronically reading an MICR character which is printed on a document (14) including the steps of: (a) providing relative movement between the MICR data on the document (14) and an MICR reader (22) so as to obtain an electronic waveform corresponding to a character included in said MICR data; (b) comparing characteristics associated with said waveforms with predetermined characteristics to provide a first identification of said character; characterized by the steps of (c) providing relative movement between the MICR data on the document (14) and an optical imager (23) so as to obtain an array of optical image data corresponding to characters included in said MICR data; (d) scanning the array in a first direction to find what appears to be a line of characters; (e) segmenting a block of image data from said array for what appears to be said character in said line of characters; (f) summing the binary ones which appear in a column of one side of a character to obtain a sum of the binary ones in that column; (g) repeating step (f) for the remaining columns in the block for a character; (h) comparing the sums for the columns in the block with predetermined sums to provide a second identification of said character; (i) providing said first identification as a result of said method when said first identification is conclusive (j) providing said second identification as a result of said method when said first identification is inconclusive.

7. A method of recognizing a character which is printed on a document (14) in a magnetic ink (MICR) font, said method including the step of: (a) magnetically reading said MICR character and generating a first identification of said character; and characterized by the steps of (b) optically reading said MICR character and generating a second identification of said character; (c) providing said first identification as a result of said method when said first identification is conclusive. (d) providing said second identification as a result of said method when said first identification is inconclusive; (e) generating an error signal when both said first and said second identification of said character are inconclusive.

# FIG. 1

10

DOCUMENT PRESENT SENSOR → TO INTERFACE 28

20

DOCUMENT TRACK

12

18

12-1

DOCUMENT 14

12-2

DOCUMENT PRESENT SENSOR

DOCUMENT POCKET

25

CLD CAMERA

23

DOCUMENT TRANSPORT

16

MICR READER

22

| READ HEAD | 22-0 |
| AMPL. | 22-1 |
| FILTER | 22-2 |
| A / D CON. | 22-3 |

LINE IMAGER

48

30

| INTERFACE | | INTERFACE | 52 |
| INTERFACE | | INTERFACE | 54 |

28
26
36
38

44
40
42
32

| INTERFACE |
| INTERFACE |
| INTERFACE |
| ROM |
| RAM |
| BUFFER | 38-1 |
| MP |
| KEYBOARD |
| DISPLAY |
| INTERFACE |

INTERFACE AND CONTROL LOGIC

50

| VP - OCR |
| ADDER | 50-1 |
| SERIAL – PARALLEL CONVERTER | 50-2 |

46

CONTROLLER

24

HOST CONTROLLER

34

# FIG. 2

**James C. Morrison**
1988 Sandridge Drive
Your City, USA

3049

*July 20* 19 *88*

Pay to the
Order of _XYZ Company_ $ | 28.00 |

_Twenty — Eight_ ———————— // ——————— DOLLARS

SAMPLE ~ VOID

memo _____

⑆123456789⑆123456789⑈3049⑉000000⑇2800⑉ 52

FIELD #2   FIELD #1

14

EP 0 651 345 A2

# FIG. 3

9 2 2 2 2 2 9

0 0 6 9 4 4 0

0 0 6 3 3 6 0

0 3 3 3 9 5 0

0 7 7 1 1 4 4

0 6 3 3 3 6 0

0 9 3 3 4 2 4

0 3 1 6 3 4 0

5 9 3 3 3 9 5

5 2 2 2 6 9 0

5 5 0 0 6 6 6

4 4 0 5 0 4 4

5 0 5 0 4 4 4

5 5 0 5 5 0 5

| TRAN CODE | AMOUNT | ON - US | DASH |
|-----------|--------|---------|------|
| " T " | " A " | " U " | " D " |

10